# EUROPEAN PATENT SPECIFICATION

(11) **EP 3 334 793 B1**
(45) Date of publication and mention of the grant of the patent: **21.02.2024**
(21) Application number: 16763567.1
(22) Date of filing: 21.07.2016
(51) Int. Cl.: C09D 191/06, B65D 1/34

(54) **METAL CONTAINER FOR FOOD USE**
METALLBEHÄLTER ZUR VERWENDUNG FÜR LEBENSMITTEL
RÉCIPIENT MÉTALLIQUE À USAGE ALIMENTAIRE

(30) Priority: 12.08.2015 IT UB20153085
(43) Date of publication of application: 20.06.2018
(73) Proprietor: Contital S.r.l., 80141 Napoli (IT)
(72) Inventor: SINAGRA, Ciro, 80141 Napoli (IT)
(74) Representative: Papa, Elisabetta
(86) International application number: PCT/IB2016/054334
(87) International publication number: WO 2017/025831

(56) References cited:
- EP-A1- 1 380 413
- JP-A- 2010 064 293
- US-A- 4 507 339
- US-A- 5 451 304

## Description

### Technical field of the invention

The present invention relates to the field of the metal containers, typically made of aluminium, for food use, for example baking pans or pans of disposable type. The invention in particular relates to a method for producing such containers.

### Background

The containers made of aluminium are widely utilized for food use as they result to be light and can be handled easily, both the disposable and reusable type.

Such containers are obtained by procedures for moulding laminate sheets or tapes made of aluminium. A fundamental step of the production method consists in lubricating the material to be moulded, for facilitating the sliding of the material itself and avoiding phenomena of aluminium "seizing" in the mould. Generally, for moulding containers made of aluminium lubricating oils of mineral origin (the so-called white oils) or oils of vegetable origin are used. To this regard, see for example: Ministry of Health - Decree 18 April 2007, Nr. 76, Regulation including the hygiene requirements of the materials and articles made of aluminium and aluminium alloys intended to come in contact with food - Official Journal Nr. 141, 20 June 2007.

After moulding, such lubricating substances remain present on the container surface in a negligible quantity.

Notwithstanding the use of lubricating substances during the production step, the so-implemented containers for food use however require specific cunning actions in order to prevent food from sticking onto the base and/or side walls of the container during baking.

Aluminium and the alloys thereof, since they have a high value of thermal conductivity (feature, among other things, that makes this metal particularly suitable for baking food), can make food (above all some types thereof) to remain adhered to the walls of the container.

In extreme cases, food may thermodegrade and, potentially, the same food can develop dangerous or even toxic substances due to the combined effect of overheating and dehydration.

Such drawback is traditionally overcome by the users of the container made of aluminium adopting solutions which provide to avoid the direct contact of food with the container. The most widespread solution is that of sprinkling the container made of aluminium with grease substances, such as for example oils or butter, so as to create an uninterrupted layer interposed between food and the container itself. Even if this solution is effective, it results to be dangerous to the wholesome food diet of the consumer eating food baked in this way, as necessarily he/she will swallow the above-mentioned grease substances. Another much widespread solution consists in arranging in advance on the internal surface of the container sheets of anti-adherent paper whereon food can be positioned. This last solution results to be healthier than the previous one, but surely it is disadvantageous from the economic point of view, as the container user, for each baking, has to bear the additional cost of the used anti-adherent paper. EP1380413 discloses a method of making metal containers for food (cans) comprising the steps of coating a laminate made of metal with a coating composition comprising carnauba wax and a resin.

### Summary of the invention

The technical problem placed and solved by the present invention is then to obviate the drawbacks mentioned above with reference to the known art.

Such problem is solved by an anti-adherent container according to claim 12 and by a method for the implementation thereof according to claim 1.

Preferred features of the present invention are defined in the depending claims.

The invention allows to implement disposable metal containers, in particular made of aluminium, anti-adherent containers, in other words containers thereon food does not stick during heating or baking.

This is obtained by applying a specific lubricant on the metal material of the (forming) container. Such specific lubricant includes carnauba wax as additive to one or more oils already used in the known art. Carnauba wax - also known as E903 - is a substance of vegetable origin approved by the European Pharmacopeia as food additive. Carnauba wax is also identified with CAS-Nr. 8015-86-9 and EINECS/EILINCS .Nr. 232-399-4.

The method according to the invention provides the application of the above-mentioned lubricant including carnauba wax on the surface of the tape made of aluminium, or however of the base material, before the moulding thereof.

Therefore, the lubricant of the invention plays a double action. In fact, during moulding it acts as lubricant suitable to help the mechanical processing of the material, in particular the moulding thereof, and the container forming, thus by avoiding seizing phenomena. During the container use, the lubricant plays the above-mentioned function of not-adhering food.

In particular, after the container forming the additivating wax remains onto the walls and onto the bottom of the moulded container so as to form a layer fixedly adherent to the metal surface. The so-implemented wax coating acts as detaching agent during the subsequent processes for baking or heating food.

In this way, the invention provides a metal container, in particular made of aluminium, equipped with an anti-adherent layer constituted by an absolutely natural substance, a safe substance as far as the direct contact with food is concerned.

Moreover, as said carnauba wax used as additive in the lubricant according to the present invention acts as technological auxiliary agent in the step of moulding the containers.

In other words, the application of the lubricant according to the present invention makes simultaneously the tape made of aluminium lubricated and the related containers anti-adherent, thus avoiding additional steps of applying coating layers on the containers themselves.

The present invention then allows to provide disposable anti-adherent containers implemented by means of a quick and simple productive cycle, which provides exclusively the traditional steps of lubricating and moulding the tape made of metal, without requiring additional processing steps or technical means.

Other advantages, features and used modes of the present invention will result evident from the following detailed description of some embodiments, shown by way of example and not for limitative purpose.

### Brief description of the figures

The drawings of the enclosed Figures will be referred to, wherein:
- Figure 1 shows a flow diagram exemplifying the method for producing an anti-adherent container for food use according to a preferred embodiment of the present invention;
- Figure 2 shows, by way of example, some shapes of containers which can be obtained with the method of Figure 1.

### Detailed description of preferred embodiments

As said above, the invention provides a non-sticking lubricant suitable to be applied on a base metallic material, in particular aluminium, before a step of moulding a container, or several containers, for food use.

The lubricant comprises one or more lubricating oils and carnauba wax, present in an amount equal to quantity equal to about 90% and to 10%, respectively, of the total weight of the lubricant. The used oils can be of mineral origin, in particular the so-called white oils, or of vegetable origin.

The above-mentioned oils are suitable to be applied in the food industry, that is they are accepted in the implementation of products intended to the direct contact with food. Generally, the lubricating oils which can be used are those approved by European Pharmacopoeia (*European Pharmacopoeia, Pharmacop6e Europeénne* - *Addendum 2001* - *Triglycérides à chaîne moyenne*) and/or by F.D.A. 21 (CFR § 184, FDA21 CFR §170, FDA21 CFR172.830 and list *"Generally Recognized As* Safe *(GRAS) food substances"*)*.*

In particular, the lubricating oils of vegetable origin preferably belong to the family of MCT (*Medium Chain Tryglicerid*) oils, for example glycerol caprate-caprylate or glycerol caprate-caprylate-succinate (see for example: C. Sinagra - E. Priola "Lubrificanti alimentari per vaschette" ("Food lubricants for pans") - A&L Edimet 5/2007).

Moreover, the lubricating oils preferably are selected from a group which comprises those suitable to be used in procedures for moulding, cold or hot moulding, sheets or metal tapes, in particular made of aluminium.

The non-sticking lubricant according to the present invention is obtained by the hot mixing of oil and carnauba wax.

About nine portions (9/10) by weight of lubricating oil are additivated with about one portion (1/10) by weight of carnauba wax, in order to obtain a non-sticking lubricant comprising about 10% of wax.

The heating process is carried out with parameters, in particular temperature, and modes so as to allow a complete melting of carnauba wax in the oil. In particular, the oil is heated to a temperature equal or higher than 80°C, preferably comprised in a range of about 80-90°C. The wax is then added to the hot oil and it melts, meanwhile the mixture is subjected to stirring to promote the wax melting and the homogenization of the mixture itself.

As said above, the so-obtained non-sticking lubricant is suitable to be applied on metal tapes or plates, in particular made of aluminium, as technological auxiliary agent for a moulding, in particular cold moulding, procedure. Such moulding forms (typically disposable) containers for food use having the property of not adhering food.

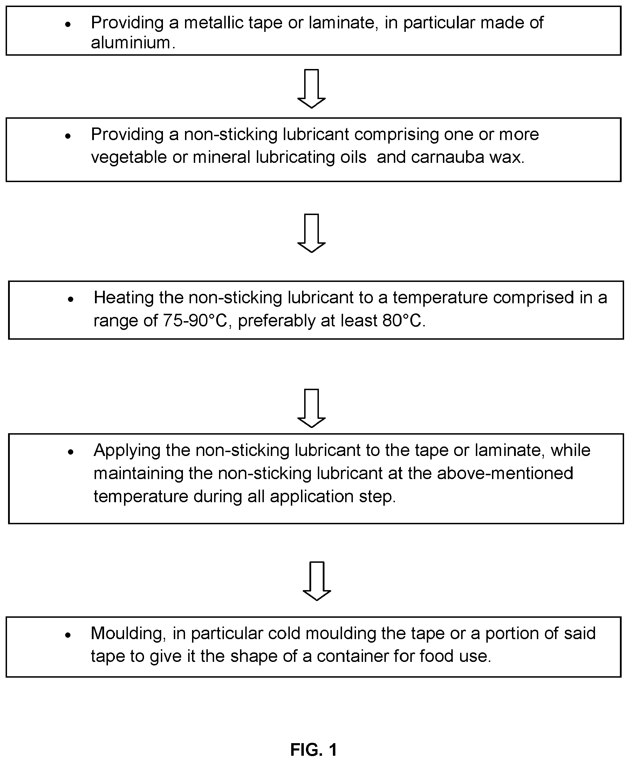

By referring to Figure 1, a preferred embodiment of the method for implementing an anti-adherent container for food according to the present invention as base material uses a tape, plate or other laminate made of metal material, in particular made of aluminium. Preferably, such laminate has a thickness in a range of about 35÷500 µm.

According to a method step, the above-mentioned non-sticking lubricant is heated, preferably to an operating temperature comprised in a range of about 75-90°C and still more preferably to an operating temperature of at least about 80°C. In this way, the non-sticking lubricant has a liquid consistency, and typically a transparent aspect, which make it particularly suitable to be applied on the laminate base material.

The lubricant is then applied on the base laminate material, while maintaining it at said operating temperature during the whole application step.

In particular, the non-sticking lubricant is applied at least at the laminate surface which will be deformed plastically to implement one or more inner walls of the container, that is the wall(s) coming in contact with food during use. More preferably, the herein considered non-sticking lubricant is applied bilaterally on the laminate, that is on both main faces thereof.

According to preferred embodiment variants, the layer of non-sticking lubricant applied on the laminate is in a quantity equal to about 80÷500 mg/m² for each application side. The applied thickness is determined as a function of the criticality of the container shape to be implemented, that is the seriousness of the moulding procedure and/or of particular food which the container will be intended to receive.

According to preferred embodiment variants, the techniques and the corresponding systems used for applying the non-sticking lubricant to the base laminate can be of the type known on itself. In particular, techniques can be used for the application by contact, by spraying or by electrostatic atomization or other techniques suitable to obtain a homogeneous spreading of the lubricant. The used techniques can be implemented by automatic control.

Preferably, the application of the lubricant on the laminate is so as to obtain a lubricant layer with uniform, that is constant, thickness. Advantageously, the lubricant is applied in a uniform way at least on the area, and then on the sides or faces, to be deformed in the subsequent moulding procedure.

The application by contact of the lubricant, for example, can be of the rag, roller or buffer contact type. In particular, in case of roller spreading technique a system, known as indirect rotogravure, can be used which carries out an "intaglio" moulding process. Such system comprises an applicator roller made of rubber and photo-etched rollers (usually small cells with truncated pyramidal shape are implemented by means of photoetching) which, upon rotating, collect the contained lubricant in a pan at controlled temperature. The system further comprises a "doctor", apt to remove the excess lubricant collected by the rollers, by making that only the volume collected in the photo-etched cells is transported onto the applicator roller made of rubber. The latter applicator roller made of rubber, in turn, transfers the lubricant onto the laminate.

The adjustment of the amount of lubricant deposited onto the laminate depends upon the speed of rollers and upon the contact pressure therebetween. Typically, it can vary in the already mentioned range of 80÷500 mg/m² of lubricant for each side.

As far as the (pneumatic or high-pressure) splash or spray automatic lubrication systems are concerned, these can provide to distribute the lubricant suitably pulverised by a carrier fluid, for example compressed air, apt to convey a determined amount thereof onto the tape to be lubricated. The lubricant pulverisation is obtained by means of the passage through suitably shaped spraying nozzles, in number depending upon the size of the surface to be coated. Preferably, the jet supplied by the nozzles assumes the shape of a conus which can sprinkle on a surface having circular shape (narrow jet nozzle) or a shape like a rectangle (wide jet nozzle).

The system for applying the lubricant of electrostatic type provides to give the lubricant a, usually negative, electric charge, and to maintain the laminate surface to be lubricated at ground potential. The lubricant, immersed in an electric field, due to the effect of the electrostatic pressure divides into tiny drops, which mutually repel and create a cloud of finely atomized product. The lubricant particles are attracted by the laminate and deposit thereon, by loosing instantaneously the electric charge.

A simplified variant of the method can provide the application of a lubricant consisting exclusively of carnauba wax, therefore without lubricating oils additivated thereto. The application can take place with the carnauba wax in liquid form (in particular heated to 89-85°C) by means of "minimal lubrication" systems allowing to apply few mg/m² of product on the surfaces, in case only where the *antisticking* effect is wished to be obtained.

After applying the non-sticking lubricant, one proceeds with the procedure for moulding, in particular cold moulding, the laminate. Such procedure determines the forming of the containers.

The laminate can be moulded by using moulding apparatuses of known type. After the moulding procedure, the lubricant remains on the container surface, thus implementing a sub-micromic anti-adherent layer.

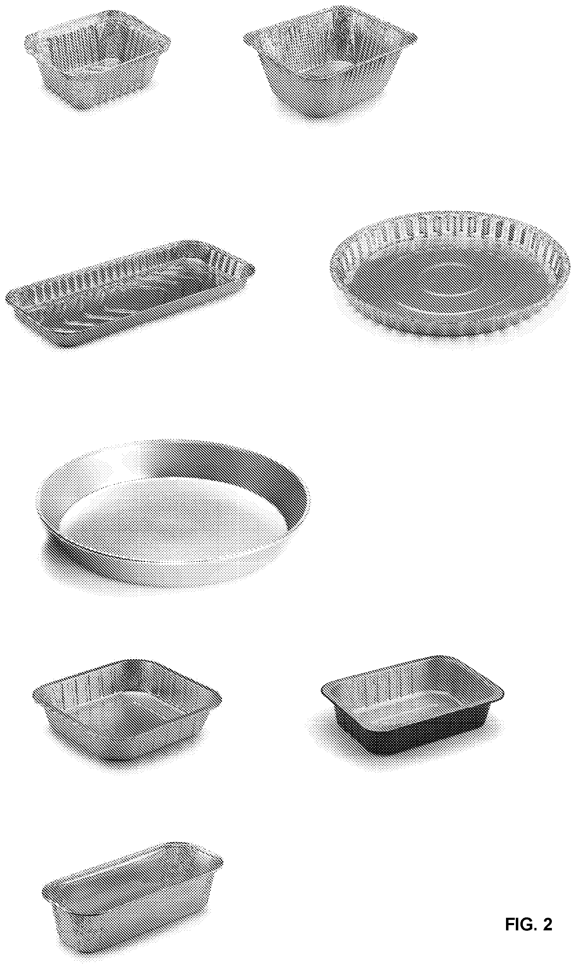

As shown in Figure 2, the shape given to the laminate, or to a portion thereof, during the moulding step can be anyone, in particular one among those of known type for the containers for food use, such as for example pan, baking pan, saucepan, lid, tray, cake pan or other, with circular or polygonal shape. The container walls can be implemented substantially wavy, smooth or semi-smooth and they can further have an outer edge, for example configured in cross-section substantially as a "G" or a "L". Preferably, the obtained container is of disposable type.

In case of re-usable containers the *antisticking* effect offered by the lubricant is guaranteed only for the first use (first baking).

The apparatus for implementing the above-illustrated method, and then ultimately for implementing the sofar mentioned containers for food, can include units and technical means of type known on itself.

The anti-adherent containers for food use implemented as illustrated above and according to a preferred embodiment of the invention include a main body made of metal, in particular aluminium, and a layer of non-sticking lubricant as described previously. Such layer, as already said, involves at least the wall(s) of the container coming in contact with food during use, in particular a bottom surface and/or one or more side surfaces. In the present context such walls are referred to as "internal" walls of the container.

As said above, after the moulding step, the lubricant remains adherent to the container surface to constitute a, preferably uninterrupted, anti-adherent layer, which guarantees the food detachment during the baking processes therein the container will participate during use by the end consumers. The results obtained by means of experimental tests demonstrate that it is sufficient that the finished container surface has a layer of lubricant at least equal to 5÷15mg/m² of sole carnauba wax in order to implement an adequate anti-adherence to food.

## Claims

1. A method for making an anti-adherent metal container for food use, in particular a container made of aluminium, which method comprises the steps of:
- providing a laminate made of a metallic material, such as a tape, in particular made of aluminium;
- providing a non-sticking lubricant comprising carnauba wax and preferably one or more lubricating oils of vegetable or mineral origin;
- heating said not sticking lubricant to an operating temperature comprised in a range of 80-90°C;
- applying the non-sticking lubricant to the laminate, while maintaining said non-sticking lubricant at said operating temperature during said application step; and
- moulding, in particular cold moulding, the laminate or a portion of said laminate to give the shape of a container for food use.

2. The method according to the preceding claim, wherein said laminate has a thickness in a range of 35÷500µm.

3. The method according to claim 1 or 2, wherein said lubricating oils of vegetable origin belong to the family of MCT oils, in particular glycerol caprate-caprylate or glycerol caprate-caprylate-succinate.

4. The method according to any one of the preceding claims, wherein said non-sticking lubricant comprises carnauba wax in an amount equal to 10% of the total weight of said non-sticking lubricant.

5. The method according to any one of the preceding claims, wherein said applying step is carried out by a system selected from a group which comprises: spraying lubrication systems, electrostatic atomization systems and contact lubrication systems, including minimal lubrication systems.

6. The method according to any one of the preceding claims, wherein a layer of non-sticking lubricant is applied to the laminate in a quantity comprised in a range of 80÷500mg/m² of surface.

7. The method according to any one of the preceding claims, wherein a layer of non-sticking carnauba wax only is applied to the laminate, preferably in a quantity comprised in a range of 5÷15 mg/m² of surface

8. The method according to any one of the preceding claims, wherein the container for food use obtained after the moulding step has substantially wavy, smooth or semi-smooth walls and preferably an outer edge configured, in cross-section, substantially as a "G" or "L".

9. The method according to any one of the preceding claims, wherein said container for food use is a disposable container.

10. The method according to any one of the preceding claims, wherein said container is selected from a group which comprises: pans, baking pans, saucepans, lids and trays.

11. The method according to any one of the preceding claims, wherein said container has a thickness in a range of 35÷500 µm.

12. An anti-adherent container for food use, comprising a main body made of metal, in particular aluminium, and a non-sticking lubricant applied on internal surfaces thereof, which non-sticking lubricant comprises carnauba wax and one or more lubricating oils of vegetable or mineral origin, wherein such non-sticking lubricant is applied at least at a surface of the container arranged in direct contact with food, and wherein preferably said non-sticking lubricant is present in a quantity of at least 5 mg/m², which container has a thickness in a range of 35÷500µm, wherein said one or more lubricating oils and carnauba wax are present in an amount equal to 90% and to 10%, respectively, of the total weight of said non-sticking lubricant.

13. The anti-adherent container according to the preceding claim, which is selected from a group which comprises: pans, baking pans, saucepans, lids and trays.

14. The anti-adherent container according to claim 12 or 13, which is of disposable type.

15. The anti-adherent container according to any one of claims 12 to 14, having substantially wavy, smooth or semi-smooth walls and preferably an outer edge configured substantially as a "G" or "L".

16. The anti-adherent container according to any one of claims 12 to 15, wherein said lubricating oils of vegetable origin belong to the family of MCT oils, in particular glycerol caprate-caprylate or glycerol caprate-caprylate-succinate.

## Patentansprüche

1. Verfahren zur Herstellung eines Antihaft-Metallbehälters zur Lebensmittelverwendung, insbesondere eines Behälters aus Aluminium, wobei das Verfahren die folgenden Schritte umfasst:
- Bereitstellen eines Laminats aus einem metallischen Material, wie einem Band, insbesondere aus Aluminium;
- Bereitstellen eines nicht klebenden Schmiermittels, das Carnaubawachs und vorzugsweise ein oder mehrere Schmieröle pflanzlichen oder mineralischen Ursprungs umfasst;
- Erhitzen des nicht klebenden Schmiermittels auf eine Betriebstemperatur, die in einem Bereich von 80-90°C liegt;
- Auftragen des nicht klebenden Schmiermittels auf das Laminat, wobei das nicht klebende Schmiermittel während des Schritts des Auftragens auf der Betriebstemperatur gehalten wird; und
- Formen, insbesondere Kaltformen, des Laminats oder eines Teils des Laminats, um ihm die Form eines Containers zur Lebensmittelverwendung zu geben.

2. Verfahren gemäß dem vorhergehenden Anspruch, wobei das Laminat eine Dicke im Bereich von 35-500 µm hat.

3. Verfahren gemäß Anspruch 1 oder 2, wobei die Schmieröle pflanzlichen Ursprungs zur Familie der MCT-Öle gehören, insbesondere Glycerin-Caprat-Caprylat oder Glycerin-Caprat-Caprylat-Succinat.

4. Verfahren gemäß einem der vorhergehenden Ansprüche, wobei das nicht klebende Schmiermittel Carnaubawachs in einer Menge umfasst, die 10 % des Gesamtgewichts des nicht klebenden Schmiermittels entspricht.

5. Verfahren gemäß einem der vorhergehenden Ansprüche, wobei der Schritt des Auftragens durch ein System durchgeführt wird, das aus einer Gruppe ausgewählt ist, die umfasst:
Sprühschmiersysteme, elektrostatische Zerstäubungssysteme und Kontaktschmiersysteme, einschließlich Minimalschmiersysteme.

6. Verfahren gemäß einem der vorhergehenden Ansprüche, wobei eine Schicht eines nicht klebenden Schmiermittels auf das Laminat in einer Menge aufgetragen wird, die einen Oberflächenbereich von 80-500 mg/m² umfasst.

7. Verfahren gemäß einem der vorhergehenden Ansprüche, wobei nur eine Schicht aus nicht klebendem Carnaubawachs auf das Laminat aufgetragen wird, vorzugsweise in einer Menge, die einen Oberflächenbereich von 5-15 mg/m² umfasst.

8. Verfahren gemäß einem der vorhergehenden Ansprüche, wobei der nach dem Schritt des Formens erhaltene Container zur Lebensmittelverwendung im Wesentlichen gewellte, glatte oder halbglatte Wände und vorzugsweise eine Außenkante hat, die im Querschnitt im Wesentlichen als "G" oder "L" ausgebildet ist.

9. Verfahren gemäß einem der vorhergehenden Ansprüche, wobei der Container zur Lebensmittelverwendung ein Einwegcontainer ist.

10. Verfahren gemäß einem der vorhergehenden Ansprüche, wobei der Container aus einer Gruppe ausgewählt wird, die umfasst: Pfannen, Backformen, Töpfe, Deckel und Schalen.

11. Verfahren gemäß einem der vorhergehenden Ansprüche, wobei der Container eine Dicke in einem Bereich von 35-500 µm hat.

12. Antihaft-Behälter zur Lebensmittelverwendung, umfassend einen Hauptkörper aus Metall, insbesondere Aluminium, und ein nicht klebendes Schmiermittel, das auf dessen Innenflächen aufgetragen ist, wobei das nicht klebende Schmiermittel Carnaubawachs und ein oder mehrere Schmieröle pflanzlichen oder mineralischen Ursprungs umfasst, wobei ein solches nicht klebendes Schmiermittel zumindest auf eine Oberfläche des Behälters aufgetragen wird, die in direktem Kontakt mit Lebensmitteln angeordnet ist, und wobei vorzugsweise das nicht klebende Schmiermittel in einer Menge von mindestens 5 mg/m² vorhanden ist, wobei der Behälter eine Dicke im Bereich von 35-500 µm aufweist,
wobei das eine oder die mehreren Schmieröle und Carnaubawachs in einer Menge von 90% beziehungsweise 10% des Gesamtgewichts des nicht klebenden Schmiermittels vorhanden sind.

13. Der Antihaft-Container gemäß dem vorhergehenden Anspruch, der aus einer Gruppe ausgewählt ist, die umfasst: Pfannen, Backformen, Töpfe, Deckel und Schalen.

14. Der Antihaft-Container gemäß Anspruch 12 oder 13, der vom Einwegtyp ist.

15. Antihaft-Behälter gemäß einem der Ansprüche 12 bis 14, der im Wesentlichen gewellte, glatte oder halbglatte Wände und vorzugsweise einen Außenrand hat, der im Wesentlichen als "G" oder "L" ausgebildet ist.

16. Antihaft-Behälter gemäß einem der Ansprüche 12 bis 15,
wobei die Schmieröle pflanzlichen Ursprungs zur Familie der MCT-Öle gehören, insbesondere Glycerin-Caprat-Caprylat oder Glycerin-Caprat-Caprylat-Succinat.

## Revendications

1. Procédé pour préparer un récipient métallique antiadhésif à usage alimentaire, en particulier un récipient fait en aluminium, lequel procédé comprend les étapes de :
- fourniture d'un stratifié fait en un matériau métallique, tel qu'une bande, en particulier fait en aluminium ;
- fourniture d'un lubrifiant non collant comprenant de la cire de carnauba et de préférence une ou plusieurs huiles lubrifiantes d'origines végétale ou minérale ;
- chauffage dudit lubrifiant non collant à une température de service comprise dans la plage allant de 80 à 90°C ;
- application dudit lubrifiant non collant sur le stratifié, cependant que ledit lubrifiant non collant est maintenu à ladite température de service durant ladite étape d'application ; et
- moulage, en particulier moulage à froid, du stratifié ou d'une portion dudit stratifié pour lui donner la forme d'un récipient à usage alimentaire.

2. Procédé selon la revendication précédente, dans lequel ledit stratifié a une épaisseur située dans la plage allant de 35 à 500 µm.

3. Procédé selon la revendication 1 ou 2, dans lequel lesdites huiles lubrifiantes d'origine végétale appartiennent à la famille des huiles TCM, en particulier le caprate-caprylate de glycérol ou le caprate-caprylate-succinate de glycérol.

4. Procédé selon l'une quelconque des revendications précédentes, dans lequel ledit lubrifiant non collant comprend de la cire de carnauba en une quantité égale à 10 % du poids total dudit lubrifiant non collant.

5. Procédé selon l'une quelconque des revendications précédentes, dans lequel ladite étape d'application est effectuée par un système choisi dans le groupe comprenant : les systèmes de lubrification par pulvérisation, les systèmes d'atomisation électrostatique et les systèmes de lubrification par contact, y compris les systèmes de lubrification minimale.

6. Procédé selon l'une quelconque des revendications précédentes, dans lequel une couche de lubrifiant non collant est appliquée sur le stratifié en une quantité comprise dans la plage allant de 80 à 500 mg par m² de surface.

7. Procédé selon l'une quelconque des revendications précédentes, dans lequel une couche de cire de carnauba non collante uniquement est appliquée sur le stratifié, de préférence en une quantité comprise dans la plage allant de 5 à 15 mg par m² de surface.

8. Procédé selon l'une quelconque des revendications précédentes, dans lequel le récipient à usage alimentaire obtenu après l'étape de moulage a des parois sensiblement ondulées, lisses ou semi-lisses et de préférence un bord extérieur configuré, en coupe transversale, sensiblement en forme de "G" ou de "L".

9. Procédé selon l'une quelconque des revendications précédentes, dans lequel ledit récipient à usage alimentaire est un récipient jetable.

10. Procédé selon l'une quelconque des revendications précédentes, dans lequel ledit récipient est choisi dans le groupe qui comprend : les poêles, les moules, les casseroles, les couvercles et les plateaux.

11. Procédé selon l'une quelconque des revendications précédentes, dans lequel ledit récipient a une épaisseur située dans la plage allant de 35 à 500 µm.

12. Récipient antiadhésif à usage alimentaire, comprenant un corps principal fait en un métal, en particulier en aluminium, et un lubrifiant non collant appliqué sur ses surfaces internes, lequel lubrifiant non collant comprend de la cire de carnauba et une ou plusieurs huiles lubrifiantes d'origine végétale ou minérale, dans lequel ce lubrifiant non collant est appliqué au moins sur une surface du récipient disposée en contact direct avec les aliments, et dans lequel de préférence ledit lubrifiant non collant est présent en une quantité d'au moins 5 mg/m², lequel récipient a une épaisseur située dans la plage allant de 35 à 500 µm,
dans lequel lesdites une ou plusieurs huiles lubrifiantes et la cire de carnauba sont présentes en des quantités égales respectivement à 90 % et 10 % du poids total dudit lubrifiant non collant.

13. Récipient antiadhésif selon la revendication précédente, qui est choisi dans le groupe qui comprend : les poêles, les moules, les casseroles, les couvercles et les plateaux.

14. Récipient antiadhésif selon la revendication 12 ou 13, qui est de type jetable.

15. Récipient antiadhésif selon l'une quelconque des revendications 12 à 14, ayant des parois sensiblement ondulées, lisses ou semi-lisses et de préférence un bord extérieur configuré sensiblement en forme de "G" ou de "L".

16. Récipient antiadhésif selon l'une quelconque des revendications 12 à 15, dans lequel lesdites huiles lubrifiantes d'origine végétale appartiennent à la famille des huiles TCM, en particulier le caprate-caprylate de glycérol ou le caprate-caprylate-succinate de glycérol.
